(19) Europäisches Patentamt
European Patent Office
Office européen des brevets

(11) **EP 2 463 509 A1**

(12) **EUROPEAN PATENT APPLICATION**
published in accordance with Art. 153(4) EPC

(43) Date of publication:
**13.06.2012 Bulletin 2012/24**

(51) Int Cl.:
*F03B 17/06* (2006.01)

(21) Application number: **10766670.3**

(22) Date of filing: **12.04.2010**

(86) International application number:
**PCT/ES2010/000153**

(87) International publication number:
**WO 2010/122186 (28.10.2010 Gazette 2010/43)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.04.2009 ES 200900750**

(71) Applicant: **Astuy Díaz De Mendibil, José Ignacio 48009 Bilbao - Bizkaia (ES)**

(72) Inventor: **Astuy Díaz De Mendibil, José Ignacio 48009 Bilbao - Bizkaia (ES)**

(54) **ELECTRICITY GENERATOR THAT UTILIZES HYDRAULIC JUMPS**

(57) The generator utilizes the constant force of gravity which causes water to fall through an entry and exit circuit. The system includes multiple pipes, of various heights, and multiple wheels and generators.

**Description**

ANNEX TO THE TECHNICAL

(1) I've seen in your google ads, the generation of energy renewable particular level, an example for each Hall of State.
That the Government should encourage, and at least tell and preach, with the example of energy savings. And installed for both A mode Municipal Land Initiative. An Example of savings
Visible and tangible for citizens Installing at least
a windmill. And a minimum area of photovoltaic panels.
Connecting to the electric grid. A grain of sand is not
a mountain But thousands of municipalities together SI ENERGY SAVING CLEAN FOR ALL FOR A BETTER FUTURE. EVERYTHING IS BEGIN TO JOIN EFFORTS FOR A BETTER WORLD,
**[0005]** More peaceful and CLEAN.

SUBSTITUTE SHEET (RULE 26) CONTINUOUS ELECTRIC GENERATOR

And yet the amount of clean energy-saving products and renewable **a string of barges** or fixed platforms, with a clear multiplier effect,
**[0007]** in the middle of the river or estuary la, the two sides of the river flow, with a power generating windmills built, and connected to the electric grid, each 10 or 100 meters, or each mile, that have a multiplier effect, each other each other in their energy savings, as the barges on the **Mississippi in displacement, but still the flow of a river or an estuary,**
or Barge Athletic.
In the Ebro and the Tagus, or the Guadiana or Guadalquivir,
la or Bilbao estuary
Effectively take advantage of the tides, in a sense,
as in the other, to the efficiency savings and energy ecologically clean energy and renewable

SUBSTITUTE SHEET (RULE 26) CONTINUOUS ELECTRIC GENERATOR

As might be also the use of pipes
la underground water municipal water network itself, each municipality, to the generation of energy in the same lines of water pipes; In successive falls of 90 s, with a multiplier effect, as a controllable artificial waterfalls in their own pipes of the network pipes for municipal water each municipality, take advantage of 5 or 10 meters of artificial falls.
For the generation of artificial jumps, take advantage of the force of gravity, and thus generate electricity, with the network connection electrical, environmental clean and renewable form with the effect multiplier is required in each cascade artificially generated in each municipality, which take advantage of the force Earth's gravity.

SUBSTITUTE SHEET (RULE 26) CONTINUOUS ELECTRIC GENERATOR

For self-electricity supply, public lighting, of each municipality. That same water pipes of a building of various plants, would provide clean electric power generators, ecological and renewable each other from the pipes the network of municipal water will be stored in a reservoir or cistern, this same water to climb up to lo's tallest building to another tank or tanks above, the effect of the pressure water pipes and fall into the 90 ^, in several sections or artificial waterfalls, through various pipe diameter or The section, turbines and power generating windmills power clean, green and renewable.
By way of a chimney effect of air, this time water gravitational effect of the successive and multiple pipes that are, in the path of the length of the pipe, like a waterfall artificial, so the water moving, every one of the many generators of each pipe, with a multiplier effect for each

SUBSTITUTE SHEET (RULE 26) CONTINUOUS ELECTRIC GENERATOR

controllable artificial waterfall pipe or from a cistern or reservoir, to the next tank or reservoir, such as farming terraces slopes of the mountains, in its fall by effect of the Earth's gravity, these being water tanks,
**[0016]** watertight and independent, generating several heights or sections, several successive tanks or cisterns artificial waterfalls and clean electric power generators, ecological and renewable.
With a multiplier effect for each building of plants, or the number of times lo multiply even in a single or even building heights and floors or sections are separate, or more buildings on the same block of buildings, only with this effect of 90 s drop in various sections of the same height building, with a multiplier effect, as many times as they arise, With AI controlled freefall and 9Os, the effect of same severity terrestrial, successive artificial waterfalls, with its multiplier effect

SUBSTITUTE SHEET (RULE 26) CONTINUOUS ELECTRIC GENERATOR

electric power generation clean, green and renewable consumption both houses of the same buildings, as its neighbors, as municipal electric grid, or from other municipalities inclusive.

$$E = mc2 \quad E = mg = v(m/d\ (H2O)) \times h \times g$$

Besides that;
Like a pool filled with sea water, is filled with water sea in a tank or cistern height, the sea, same as lo can fill with water from rivers or estuaries, the edge of their beds, lo in a tall building with plant heights, and so that it is continuous input circuit seawater, and dropped from the tank or tank top, through narrower pipes with 90^ tilt, with the section or diameter of the multiple turbines Along the length of the pipe, creating an artificial waterfall controlled down

SUBSTITUTE SHEET (RULE 26) CONTINUOUS ELECTRIC GENERATOR

the next lower reservoir or tank, about 5 or 10 feet below, as the agricultural terraces of the mountains, which generate electricity clean and renewable green electricity, with the multiplier effect space of all lines added with 902 tilt that use the force of terrestrial gravity, moving each Of all the turbines of each pipe section of the well closer or deposit immediately above, the multiplier effect each of the wells or deposits or the number of these, each building heights, by multiplying the number of buildings,
[0022]    The generation of clean energy products and renewable

(2) Underwater Waterproof Bucket

Like the artificial waterfalls, dug beneath the seabed, A Cube underwater waterproof. O lo deposited and anchored, and prefabricated at the bottom of the seabed, or river, or estuary la, lake, or pond, or water dam la existing even

SUBSTITUTE SHEET (RULE 26) CONTINUOUS ELECTRIC GENERATOR

completely covered by water H2O. Which is filled with the same seawater, river or estuary, that because of The severity g = 9.8 m / s2, falls to the bottom of the height nh (hi hn) through pipes n (ti tn), with the length or surface ns cube you want (if Sn) or height for nh, with n mills on n generators (Geni Genn) for n pipe (ti tn)
See drawing or Annex B3.
With the exit of H2O through the outlet pipes (Tn Trn)
As a continuous loop of input and output to the tank or cistern H2O Superior.
That in this case would be the H2O sea, river or la river, lake, or pond,
[0029]    la dam, including existing water, covered entirely by H2O.
Until his departure le It also can add additional Cube continuous generator or constant the year 8760 hours, a sewage treatment and desalination.

SUBSTITUTE SHEET (RULE 26) CONTINUOUS ELECTRIC GENERATOR

To return the purified or desalinated water for human consumption or crops.
Formulas

$$E = mc2 \quad E = mg$$

In Drawing A)
G is a constant 9.8 m/s2, as a force constant of the material energy;

SUBSTITUTE SHEET (RULE 26) CONTINUOUS ELECTRIC GENERATOR

Udder falling motion VF2 = VI2 +2 AE

W = 0 / T => Angular Velocity

UNIFORM CIRCULAR MOTION V = W = U-RADIO> LINEAR SPEED

Hooke's law (PIERS) DL = F / K

GRAVITATIONAL ATTRACTION F = G M M/D2

Momentum p = M V

PRESSURE Pr = F / surface (N/m2)

SUBSTITUTE SHEET (RULE 26) CONTINUOUS ELECTRIC GENERATOR

HYDROSTATIC PRESSURE Pr H = H DG

PUSH E = ^ Vr liquid ciuMerrnpoo-'D '*

WORK W = FECos of α

Power P = W / T (JULY / second)

Mechanical potential energy Ep = M G H

KINETIC ENERGY 1/2MV2

SUBSTITUTE SHEET (RULE 26) CONTINUOUS ELECTRIC GENERATOR

Heat Q = M-K-AT

THERMAL BALANCE M1 K1 (I1-I)-K2 = M2 (M2)

LINEAR EXPANSION U = I-d + λt)

D. SAME FORMULA AND CUBIC SUPEFICIAL, σ => S γ => V

EQUATION OF PERFECT GASES V1ZT1 P1-P2 = V2AT2

SUBSTITUTE SHEET (RULE 26) CONTINUOUS ELECTRIC GENERATOR

Electrical attraction F = q ^ qz/D2 K (K = Cte.)

ELECTRIC POTENTIAL ΔEp/q0 = K V = q / D (JULY / coulomb)

INTENSITY q / t (coulombs / second)

OHM'S LAW R = (Va-Vb) /I (VOLT / AMP)

Resistance R = ρ LENGTH / SECTION

Series resistance Rt = ΣRi; ACT OHM = (Va-Vb) = RI

SUBSTITUTE SHEET (RULE 26) CONTINUOUS ELECTRIC GENERATOR

Resistor in parallel 1/Rt = I / RI +1 / R2

WORK W = r-R-T (AZ-Ω-S)

POWER P = I2-R (A2 Ω)

Like Barlow Wheel pipes nt n (ti tn)

Barlow's Wheel is a copper disc that lies between the poles of a magnet And whose edge is in contact with a small pool of mercury.

A battery is connected between the axis of the wheel and the mercury reservoir and notes that the wheel and the mercury reservoir and observed that the wheel

SUBSTITUTE SHEET (RULE 26) CONTINUOUS ELECTRIC GENERATOR

begins to spin angular velocity reaching a constant limit. ( Not too = We will check that the angular velocity is proportional to the intensity of the current.

The Barlow wheel is reversible in the sense that if you remove the battery and it spins by applying an external force, one can measure the induced current generated. In the page titled disc), motor and electric generator, we will study in detail (Not too = the role played by the induced current in the movement of the wheel of Barlow.

(3) and Physical principles of the force exerted by the magnetic field

The force on a current element dx at a distance x from the axis of the disk is

$$dF = xB\text{-}\_ \text{ ut } ¿¿n:$$

Its magnitude is dF = dx iB and is addressed) as we see in la

SUBSTITUTE SHEET (RULE 26) CONTINUOUS ELECTRIC GENERATOR

(4) Materials

H2O,

Both the sea, As the river or estuary la,

(5) Elements Involved

As a continuous loop of input Cube cistern or tank or Higher Until The Cube cistern or tank or next to the tank bottom n bottom. Until his departure. le It can add a water treatment plant and a desalination To return the purified or desalinated water for human consumption of cultivation

By way of farming terraces of the mountains,

.- For the multiplicative effect (Di Dn)

SUBSTITUTE SHEET (RULE 26) CONTINUOUS ELECTRIC GENERATOR

- - In the fall of 90s, with g as constant, the force of earth's gravitational g = 9.8 m/s2 through.
- - In the Foreign cubes, tanks or cisterns, which are not already immersed Within the H2O, H2O extract water to the height initial
  N h (hi hn).
- - Multiplier Effect:
  Pipes (ti tn) For the multiplicative effect
- - In the section or diameter of each pipe (n * you tn) (if Sn) Subsection Al of each mill or each of the generators Energy (subsidiary Subsn)
- - In Drawing B) For each one of all;
  Generators (Geni Genn) within the height h (hi hn)
  In Drawing A) of each pipe (ti tn) by the multiplier effect,
  SUBSTITUTE SHEET (RULE 26) CONTINUOUS ELECTRIC GENERATOR
- - in each building heights of plants (EI) ( or the sistem, of this invention)
  ( V Mentions Thanks for your help and knowledge to.
  Jesus, St. Augustine, Moses, Newton, Galileo, Cervantes, all of them, my love, friends and family, without them I would not have been possible progress in the knowledge la and freedom for all men and women on this planet world called Earth, By Knowledge of human Al.

And the Progress and Freedom wherein we are created by God, to choose for ourselves, our own way la and destination in life between good and lo lo always bad and with God's infinite forgiveness, and to free us from being in fig la and give good results and knowledge for all, lo best, by themselves or committing errors each, without prior awareness of one's own mistakes or committing And applause and Palms to Jesus for all your support moral and interior. Asko Ezkerrik them all. Ezker Mile. Thank you very much)

SUBSTITUTE SHEET (RULE 26) CONTINUOUS ELECTRIC GENERATOR

(6) Multiplier Effect

- . Pipes (ti tn)
- . The section or diameter of each pipe (n * you tn) by (if Sn)
- . For Sub-Section la each mill or each of the

Power Generators (subsidiary Subsn)

-. Generators (Geni Genπ) within the height h (hi hn)
In Drawing A) of each pipe (ti tn) by the multiplier effect.
-. The bucket or tank or tank top by the multiplier effect (Di Dn)
-. For each building heights of plants (EI) (7) of the elements of the Artificial Waterfall or multiplicative effect of n cubes $H_2O$ Closed Circuit
-. $H_2O$
--. Both the sea, As the river or la estuary, lake or pond or water reservoir la including existing, fully covered by $H_2O$.

SUBSTITUTE SHEET (RULE 26) CONTINUOUS ELECTRIC GENERATOR

- . As input DC Circuit's Cube, the tank shell or Higher to the bucket or tank or cistern next to El Cubo n less than
- . In fall of 90 s, n height, or nh (hi hn)
- . With g as constant, the force of terrestrial gravity g = 9.8 m/s2,
- . Throughout, n pipes n t (ti tn)
- . By way of farming terraces of the mountains,
- . For the multiplicative effect (Di Dn)
- For each n Building Cubes (EI).

In Bilbao to March 12, 2009
Signed Astuy Iñaki Diaz de Mendibil. DNI W

SUBSTITUTE SHEET (RULE 26)

**Claims**

1. cube through which falls $H_2O$ until the end of it, generating electricity and energy, clean green and renewable, continuously and consistently, the effect of the force of gravity, g = 9, 8 m/s2, as constant as the wheel of Barlow, multiplicative effect of the energy used by multiple elements comprising or consisting in the same bucket, and lo are possible, they are;

2. With n surfaces, base, or similar farming terraces of the mountains, many times, on times, as you will repeat on the same cube.

3. with nh, on stage, as n times as you like,

4. with nt, on pipes, as n times they want,

5. of section, s, and ns, ns times as they want,

6. with n generators, n gene, as n gene is like,
SUBSTITUTE SHEET (RULE 26) CONTINUOUS ELECTRIC GENERATOR

7. of n mills, n mills, such as n times the like, connected to generators

8. to section, or extension, sub-sections n, n sub sec, of the section of the blades or vanes, extending, in function of the n sections, each n pipes, nt, for n times as many they want,

9. with nt $H_2O$ outlet pipes, which has fallen from lo height of the cube, allowing the entrance of new continuous and constant H 2 O, through the upper part,

10. is finally it can also add to its best use and performance of;

11. A desalination $H_2O$ $H_2O$ even freezing and decanting the salt, as at the poles by temperature differences, to take advantage of both the large amount of electricity generated constantly and continuously, as well as to optimize the outgoing $H_2O$ through pipe, either directly to the outside;
SUBSTITUTE SHEET (RULE 26) CONTINUOUS ELECTRIC GENERATOR

   (A) the sea, river or lake or pond, (b) either continuous closed circuit movement of the input $H_2O$ and $H_2O$ output. For la continuous and constant generation of electricity.

12. and, or, a water treatment plant to optimize the $H_2O$, both for human consumption or crops, if the bucket was in the sea, or the $H_2O$ proviniese sea or a river, a river, or even a lake or a pond, see Cartoon 1, 2 , 3, 4 and 5,

13. The hub and constant power generator may also be continuous in a plant building heights n,

14. or in a city block

15. or constructed buildings or structures on the surface, or in a continuous avenue of buildings,

16. O in the subsoil, be impervious cube construction

17. O, or the, bed of a river or an estuary,
SUBSTITUTE SHEET (RULE 26) CONTINUOUS ELECTRIC GENERATOR

18. or anchored to the bottom from the coast marine

19. or anchored to the bottom of a lake, a river, an estuary,

20. O of a pond that already exist.

21. Whenever this covered with $H_2O$, and there is a continuous loop or $H_2O$ water, through the n lines, with additional features and elements described above. With the constant, g = 9,8 m/s2, like Barlow's Whell, => E=m x g, instead of => E =mc2 , => For the generation of electrical energy, through the mills n generators. This, of n of the n pipes section of constant electricity generator cube,
SUBSTITUTE SHEET (RULE 26) CONTINUOUS ELECTRIC GENERATOR and the n sub-section of the blades of extension, the n power generators mills cube power generator constant and continuous.
TECHNICAL
SUBSTITUTE SHEET (RULE 26) CONTINUOUS ELECTRIC GENERATOR
The technical characteristics of the cube generator, constant and inexhaustible energy Continuing, if the bucket is covered with $H_2O$, and keep the circuit without plugs or obstacles to its constant steady flow of electricity generator, clean,
green and renewable. On the effect of the constant force of gravity , g = 9.8 m/s2, as the Barlow wheel through n surfaces, or terraces, $H_2O$ fall in a continuous and constant circuit, which contains the hub, or the n blocks, electric generators, n extension
Falling through said continuous loop, for the n pipes, nt, n heights, nh, n section, of n sub sections of the blades of the n mills, n different heights, nh, each of the n lines, each of the n generators, n gene, leaving through output n tub (a) the outside,

SUBSTITUTE SHEET (RULE 26) CONTINUOUS ELECTRIC GENERATOR or (b) a continuous loop input and output of H2O. With the addition to maintain constant input and output of H2O. Generate a continuous source of electrical power and constant n times as you want to generate, n , from Iñaki Astuy cubes.

See the description and appended detailed and numbered, technical characteristics, again, with formulates, E = mc2 by E = m x g ,

and drawings A, B, 1, 2, 3, 4, 5 of the cube power generator of constant from iñaki Astuy.

Signed in Bilbao on March 12, 2009

Iñaki Diaz de Mendibil Astuy

SUBSTITUTE SHEET (RULE 26) CONTINUOUS ELECTRIC GENERATOR


**Amended claims under Art. 19.1 PCT**


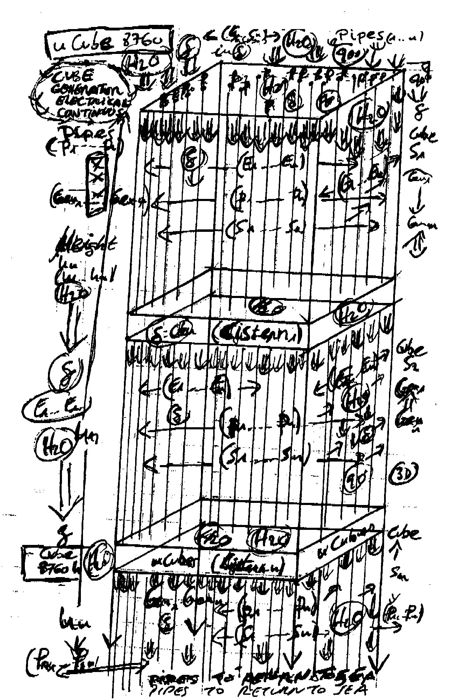

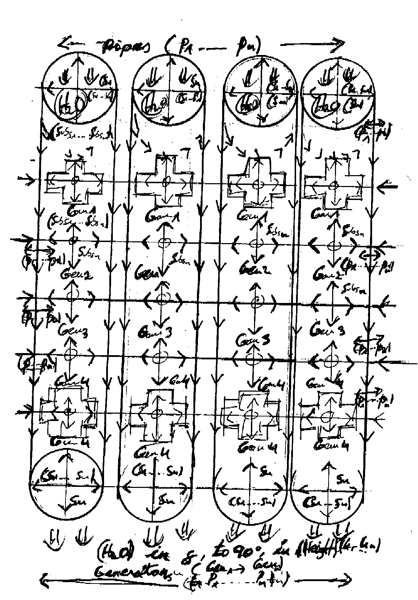

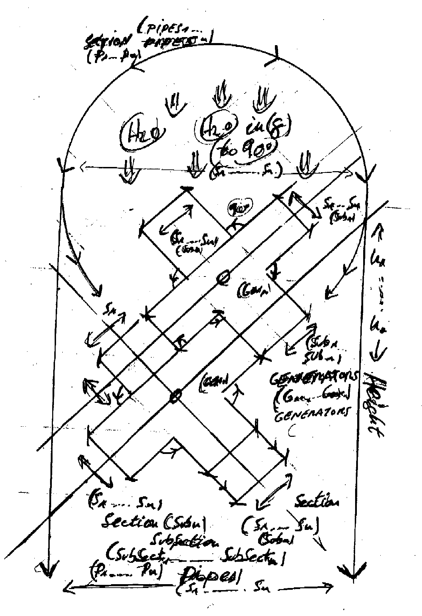

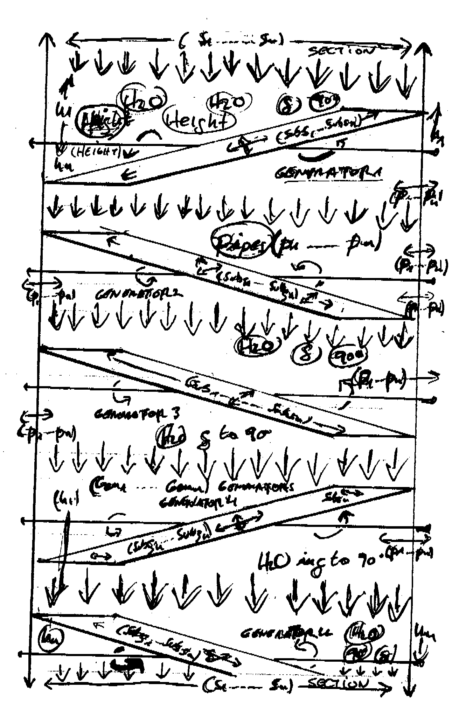

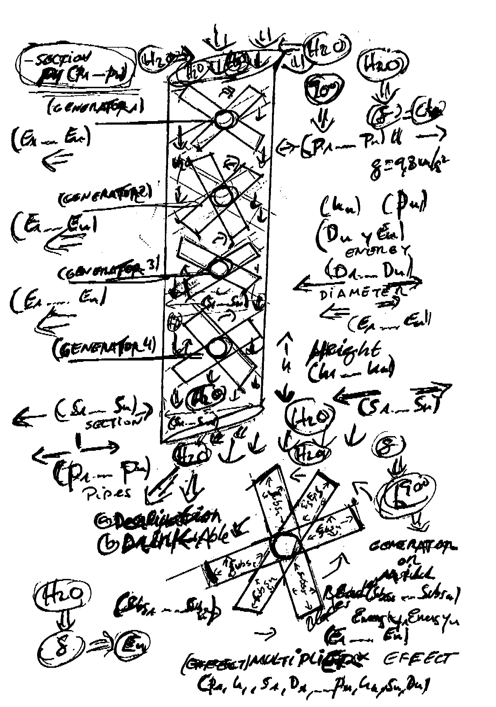

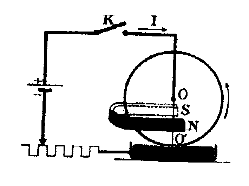

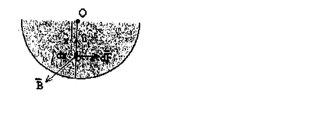

**1.** (A) (Preamble to) The first claim of the Cube, continuous electrical generator, electric, (1) that artificially reproduced. inside pipe (5) (6), the various hydraulic jumps natural water, without any need to depend on the water of the rain, or varying river flow, But will existing accumulations of water, (12) rather than the sea. lakes. v of the existing ponds at the same time: v estuaries of rivers. Figure 1.

In or to different heights or h. And with external energy sources (11) for pumping the return of the total volume of Incoming H2O (3) which has to be equal to the total volume = water Outgoing H2O (4). And at a height h above with respect to the initial height above the surface of the total volume of H2O Incoming (3) the bucket (1), continuous electrical generator h-1

That in turn is also the height above the level of the bottom of the bucket (1), hfc <hfvc, to the surface end of the total volume of H2O water wells or ships or communicating vessels (4). Regarding the level of the surface of H2O, the Cube (1) continuous electrical generator, which are connected by as many pipes (5) (6). Although the substance of these is at a height inferior to the continuous electrical generator hub What then, it is back and returns again. Since the water level, and on its upper surface. And evaporate. Generating A Positive Energy Cycle. This volume of incoming water, On your way between them. From the hub, continuous electrical generator (1), to wells or ships or communicating vessels (10). For the sole purpose and use positive energy of the force of gravity la. constant for the height h of the cube (2) (1) continuous electrical generator.

CONTINUOUS POWER GENERATOR

Without any need to rely on rain or natural hydraulic jumps on the nature, Since these are created artificially, the volume of water Both Incoming and Outgoing (3) (4) Since the height difference, 1 - level incoming water into the bucket, 2 - the upper water level of communicating vessels and 3 - the water level from which the feed pipe (5) (6), blades (8) and generators (9) h2o water, cubed, continuous electrical generator (1) Where the different heights, I <h = h h2o see next)

(I) (B) characterizing part of claim number 1 t 1) of the cube. continuous electrical generator. electricity. Artificially reproducing within pipes (5) f 6) Jos different natural water waterfalls. without any need to rely on rainwater, or varying river flows. But is existing accumulations of water, whether from the sea. lakes, ponds v from those in the same moment: v estuaries of rivers. Drawings 1. 2. 3. 4. 5 6. 7. 8. 9, v follows. And what are its elements and internal mechanisms, **characterized** the bucket, continuous electrical generator, electricity, too, in its mechanisms and elements:

1 - Lower Cubes (1). in depressed areas in height h. with respect to the surface level of the incoming water of h-1 = I. v partially also partially underground. or more surface in contact with air. Drawings 1. 6.

7 and following:

Always, in a plane below the sea level, h-1 = I, lake, pond, river, estuary, or other accumulation of water, wherein the system is installed, and within, the surface of the land, or the shore, with respect to the lower surface of the sea,

CONTINUOUS POWER GENERATOR

h = h incoming h2o, lake, pond, river, estuary. we get water for our bucket generator.

That effect of the gravity = constant, g = 9.8 / ms2, *hc, this water is channeled to its end, high I (2), preferably greater than 100 meters and can be more or less the height I depending on the characteristics of the Cube, Continuous Electrical Generator (1). 2 - with n-1 v or more successive surfaces. few are available in your area.

Drawings 1, 6, 7, 8 ff Basic, or similar farming terraces of the mountains, so many times in succession, or to n-1 times as you want to repeat, in the same bucket. Thus, we can also section height (2) .... hcl HCN-I, the same cube, continuous electrical generator, electricity, both for the regulation of height I, we want to give or section or partitioning, several buckets, the main hub. As, in order to access it, both for maintenance of each section of the hub (1), their pipes (5) (6) and generators (9), and for repairs. May also have several sections, backup, in case of breakdown or maintenance. View Drawings numbered 1,
the following.

**3.** It also consists of n-1 have heights deep.
As any case this point in depth of the cube (1). I(2). It is recommended that is 100 meters, more or less well. See Drawings, 6. And 7 below. the whole Cube Continuous Electrical Generator Electricity 4 - It also consists of n-1 pipes (5) (6) or the sum of a large amount of them as possible from them la or also those required Drawings 1, 2. 3, 4, 5, 6, 7, 8 and following
CONTINUOUS POWER GENERATOR
Through the Continuous Electrical Generator Cube (1), there are n-1 lines and subsequent lines or more (5) (6), specific mechanism of the Cube, Continuous Electrical Generator (1), electric power, which channel and lead by the same gravity, sea water, lake, pond, river, or estuary, the lower hub, or leave, successive outlet pipes (6), water to the communication pipe (6), to wells or ships or communicating vessels (10), bilge pump (16), and return pipes (6), of that total volume of incoming water (3), from a greater height h +1, h + I> h, and always assisted by an external source energy (11) to the same hub system, continuous electrical generator (1) to reach to a small distance, actually existing between the difference of height h is h .20 salt is h20, h is salt h2o> h is h20 h2 0 = h is the water table h20 h2o in to = h> hc h20 enter, is virtually nonexistent, and that separates them from the surface, the water level (4), of these wells or ships or communicating vessels (10), the lower level of the surface of origin, the total volume of incoming water (3), in the hub (1), continuous electrical generator (9), of electricity. Always helped; For external energy source (11), existing distinct from the energy generated in the same bucket system, (1) continuous electrical generator for electricity.

- (1) - (4) - (A) - f inlet pipes 5) output v t 6) of the water volume of the cube (3) (4) (1), continuous electrical generator. reproduced artificially. natural hydraulic jumps h2o water.

When they're always in the following circumstances the artificial reproduction of water hydraulic jumps. artificially propagated. at different heights. h, and therefore also artificially placed such different heights: In Form U (1). So that all v Artificially reproduced. in and of my own invention, the hub (1). electric generator
CONTINUOUS POWER GENERATOR
continuous electricity, always through artificial piping system (5) (6), that make up the reproduction of natural jumps. hydraulic water h2o:

Are also at higher altitudes finally, (4) hvc > I(3), with respect to the level of the surface of the water height h H2O Incoming (18), going down to lower altitude to a depressed area at height hl = hc, y hh2ovcsal> hh2oent, and inland and near shore to, and the surface of H2O Incoming water level (18), at the height of the lower elements and mechanisms that generate electricity Cube (1), Continuous Electrical Generator of my invention. with respect to these and via connection pipes (5) (6). The Cube, (1) Continuous Electrical Generator, Electrical, my invention, reproducing artificially the different heights of entry (3) and outputs of water h2o (4), I> h incoming h20 (18)= h h2o communicating vessels (4).
Provided through pipes (5) (6), with its own characteristic components; The hydraulic natural waterfalls. Through which the water falls H2O, which comes from pipes (5) filling the sea, lake, pond, river, estuary, or other accumulation of water at or higher than this cube, Continuous Electrical Generator, Electricity. And through it (1). Drop the incoming volume of H2O (3). In all pipes (5) (6).
And until the end of the height h of this (1) (2), generating electricity and clean, renewable energy, a continuous and constant, due to the force of gravity , g = 9.8 m/s2 as a constant, multiplicative effect that energy, the many components and elements used to include or consist of lo in the same hub and lo are possible (1) .... (18), inlet pipes (5) and water outlet (6), several sections and repetitions of cubes CONTINUOUS POWER GENERATOR enable (1) generate more and more power and also to enable maintenance and repair their own faults of components and elements of the electric generator hub. Water falls through the outlet pipes of the hub (6) (1), continuous electrical generator, a successive series of n-1 communicating vessels (10), or the sufficient and necessary number of successive and Communicating Vessels With Bilge pumps pumping (16) Total Volume of Water H2O Incoming, as shrinking water vessels, which make and keep the total volume of water entering the bucket, continuous electrical generator, electricity, and not collapse flow and is not continuous and constant departure and not go outside, the same total volume of water entering the bucket, to the outside and the same height level of the accumulation of water (18), from which the total volume of incoming water in the bucket (1), continuous electrical generator, electricity,
well do the sea, lake, pond, river or estuary .... (18), which act as wells or drain communicating vessels (10), the total volume of incoming water, the entire cube, (1) continuous electrical generator of electricity, to expand the surface and to all the extension, where the total volume of incoming water in the bucket (1), continuous electrical power generator. That always helped by an external power source (11) (16), existing or that may arise, such as the one wind or marine, photovoltaic, and other external sources of power at the same Cube (I 7 continuous electrical generator. For your return as well, by successive and necessary return lines (6), the total volume of incoming water (18), in the Cube (1) (3) Continuous Electrical Generator, Electrical, my invention. With the pumps pumping to bail to (11) (16),

the total volume of incoming water into the bucket.

Always from a greater height to this (3) (4), h is salt h2o> h h2o that enter, or in to the system , (18) to the shore and at sea level or lake, pond, river or estuary, from which, to be always regulating (10) (11) (16), the total volume of water emerging, the volume

CONTINUOUS POWER GENERATOR

total incoming water, so computers, and various and successive shots or intake vents or drainage (16), located in the upper part thereof of this, and the top water level (4), each well or Communicating Glass (10), (11) (16) for the drainage of the total volume of incoming water, the Cube (1), continuous electrical generator, electricity, and at different heights h, (3) (4) (18) of each well or communicating vessel (10),

the total volume of incoming water, to get it to flow, a continuous and constant, the volume of incoming water and outgoing water volume. Since all the necessary successive communicating vessels (10), in addition auxiliary, for replacement or extension in case of failure or maintenance, the assembly of the succession of several Communicating Vessels (10) (11) (16) (4), for the drainage, the total volume of incoming water in the bucket, continuous electrical generator (1), electricity, are also located inland, like the bucket, but at a greater distance from it, and shore level, sea, lake, pond, river or estuary from which the total volume of water entering the Cube (18) (1) (3) (4), continuous electrical generator for electricity.

**5.** It has also a section, s. v n-1 sections, or of several successive sections vo. s n-1 times, you want to extend the amplitude of the cube. Continuous electrical generator (1), or extension sections or Partitions of the same sections, View 1 and successive drawings of various parts or sections of the cube, continuous electrical generator for electricity. Drawings 1, 2, 3, 4, 5 CONTINUOUS POWER GENERATOR

**6.** consists of t spoon blades 8), and the blades (9) proper to the type of electric generators Francis Kappler , is , or another different, existing, hydraulic generators. As the two rotational axle (8), which are the spinning electric generators f 9), v successively in parallel across la extension of the height of the cube hc (2). Drawings 3, 4, 5, 6; As the diameter of the pipe itself thus lowering the bucket water H2O (5) (6) and the ascension pipe upstream or U-shaped or W, pumping the total volume of water input h20 (8) (10) (11) {16) (4) (18), which becomes the total volume of h2o output of the system pumped out of the bucket, continuous electrical generator, electrical, pumps with pumping again, both internally and always helped by an external power source, outside the bucket system, continuous electrical generator, electricity previous blades that cover the way, the 360 la s successively falling water, (8) the first two an 18 02 in the horizontal plane and (8) the following two spoon blades the other 18 02 of the horizontal plane of rotation, covers overall diameter, 2 n r, the surface of each of the several inlet and outlet (5) (6), h20 water, bucket system, continuous electric generator, electricity (1).

**7.** It is also common, addition of n-1 generators, n-1 gene (9), or more, generators as you want to add or multiply their effects add v generators, like lo currently do wind generators, or multiply to produce electrical power generated in the system hub, continuous electrical generator. Drawings 3 .4. 9 v follows:

That advantage, the h20 water hydraulic jumps, which artificially reproduced in the bucket (1) (3) (4) (18), continuous electrical generator, of

CONTINUOUS POWER GENERATOR

electricity, established along the length of all the height I, taking the bucket, continuous electrical generator, electricity.

And the sums of the n-1 lines, throughout the length of its height I, and the section, its diameter, 2 nr, each of the pipes. (5) (6) (3) (1) (10)

Since a larger diameter, each of the pipes, the greater the section, of all the successive, (9) n-1 power generators hydraulic we place, and sections of the surfaces of each of the blades or blades (8), each of the n-1 hydraulic generators (9), and we add more, as a multiplying effect, along the length of each of the sums of all n-1 pipes (5) (6) in any extension, its height h I vc (3) (4), Same, or that add each of them, have the same height (3) (5) (6), which have the height of the cube continuous electrical power generator. In addition to the multiplier effects that IE can add to the Pelton hydraulic generators or higher also at, or Francis Kapplar, or another like it (9), which also exist in wind power generators, which multiply the movement rotation of the blades or vanes thereof.

**8.** The cube, continuous electrical generator, electricity: It consists also of a circular system of vessels or wells or Communicating Vessels (10 H 6 H 4) (11 H 16) f 18) of my own invention further also: What are the mechanism for the total drainage volume h2o incoming water in the boat, or well or main hub, water inlet, the electric generator continuously through these communicating vessels. Drawings 1, 8. 9 v following;
CONTINUOUS POWER GENERATOR
In this case being the Communicating Vessels f 10) inland, with respect to the seashore, lake, pond, and the same height h vc> incoming h20 = h> hc, (3 H 4 H 18)
is approximately half of the circle (10) (6) with respect to the main hub h20 water inlet, the hub, continuous electrical generator (1), is artificially reproducing different heights (3) (4) (18) of the levels of the water surface h20. of the cube, communicating vessels v level of the surface of the cube-inlet water through pipelines. Drawings 7. 8 v following -
That keep the volume of water input H2O. is greater than the volume of water h2o output v which does not sink the ship with respect to the main boat floats interconnected with each other via pipes or shafts with respect to the main WELL water inlet. Communicating Vessels or (10) with respect to the hub, continuous electrical generator (1):

That dwarf v pump (16) (11) (10) (4) (18) the total volume of incoming water, ships or vessels or wells Callers to the system of constant flow of water outside the bucket system, continuous electrical generator, not collapse or sink inoperable. With pipes connected in turn to each other (6) and at different heights, h vcl, vc2 h, h h vc3 is n-1, .... with respect to each other, of this same interconnecting pipes between Communicating Vessels (10), both in the horizontal plane surface of the upper end thereof communicating vessels, by way of terraces of different heights to each other (4) h is an end , h is final 2 .... , H is the end is final 3 h n-1;
CONTINUOUS POWER GENERATOR
As each of the various pipes and at different heights from each other for emptying these other (6),
Communicating Vessels thereof (10) of ascent of the volume of incoming water, which becomes water volume outgoing Thanks to these same Communicating Vessels. For emptying the total volume of incoming h2o water, which has to be equal to the total water volume h2o ledge. (3) (4).
Discharging at higher altitudes hvc (4), the level of the surface water input h2o (18), piping the hub (5) (6), continuous electrical generator (1) (3) I, and at the same level as the plane of the surface level of the incoming water H2O (18), h20 hvc h2o incoming outgoing = h> h h2o incoming The system feeding the hub, continuous electrical generator (1), electricity, my invention. Through a pump system (10) (16) of the outgoing water in equal volume to the incoming water to flow continuously h2o water, (3) (4) (18) and the system does not collapse the hub, continuous electrical generator, electricity (1). Provided by and helped to, the bilge pumping (16) the volume of water emerging from an external source of energy (11), at the same hub system, continuous electrical generator (1), electricity, avoiding the collapse and lock it and the water flow and rotate normally outside the system of the cube, continuous electrical generator constantly. U-shaped or V piping, from the bottom end of the hub (3) (1), continuous electrical generator. They also carry, blades or paddles as a spoon (8), the spinning mills for turning or
spinning the n-1 generators (9), which will add a multiplier turns. As now existing and also under wind generators, in the path of water h2o, to
CONTINUOUS ELECTRIC GENERATOR
the level of the water surface (1) (5) (6) (10), the set of pipes communicating vessels, for pumping (16) (18) to return lines, the higher the protrusion height h is h (4), that the water level or the groundwater level in the volume of incoming water incoming h h2o (18), h is h2o outgoing => h h20 input As well at the same surface of ground, or on the course end of pouring of the outgoing water to a height level below the level of incoming water, outside the hub, continuous electrical generator (1), and
pumped into the bilge the total volume of incoming H2O (16) (10) (11), which becomes the same or
equal volume of water = h2o ledge. Always aided by External Power Supply (11), to prevent the collapse ó sinking bucket system, continuous electrical power generator, so that it flows steadily and continuously, and turn, (and so does not collapse ever, and equaling stand both the velocities and pressures, the total volume of water h2o, incoming and outgoing until its collapse, and unemployment, and eventually become static. Something that does not occur with my bucket system, continuous electrical generator (1), electricity) and turn and continue rotating the entire volume of water h20 incoming Outside the cube of the same system, continuous electrical generator (1) of electricity. Which thus becomes a constant, and in the same, or equal volume of water = outgoing, the higher the height h of source of water accumulation in the system entering the hub (18) (1) (3), continuous electrical generator, electricity, my invention. For output of the system or even within the interior of the accumulation of water input to the system h2o hub, continuous electric generator, electricity, provided through pipes (5) (6), and also to a smaller height than the level of the surface sea water (4) (18), lake pond, river or estuary or

CONTINUOUS POWER GENERATOR

any accumulation of water that feeds water through pipes always, the hub system, constant electricity generator (1), of my invention.

Always should be, As =, the total volume of outgoing water, the total volume of incoming water or greater in their absence, must exist, the mechanism for regulation, closing or adjusting (17), that volume of incoming water, since the control of the total water volume of outgoing or return to the surface level of the incoming water (3) (4) (18), so that this computer controlled, the total volumes of water outlet (17), equal =, with the volumes of water inlet, the hub generator (1), or with small variations, if it is only slightly higher, provided that prevent the valve successive unprimed prepared (17) (16), suction pumps,

bailing water from each set of successive and necessary Wells, by way of communicating vessels (10), with pumps bilge pumping the total volume of the incoming water (16), the Cube continuous electrical power generator (1), of my invention. For flowing the total volume of incoming water. As a constant,

Volume = Volume h20 enter, or into, and H2O out going, = Constant. So that the potential energy obtained is always also a constant, G As another constant.. And Time, T, operates as a more constant.

As all this series of successive and various constants;

1 - Total volume of water in relation to 2 Outgoing and regulating the, V = constant salt h2o

2 - Total volume of incoming water, h2o in to V = constant

3 - Terrestrial Gravitational Force, g = 9.8 m/s2 x h = constant

4 - Height or have the Cube, outgoing continuous electrical generator, hc = Constant

5 - The Power and the Potential Total Power Cube Resulting continuous electrical power generator F = m * a, P = V * g * h h20 = Constant

CONTINUOUS ELECTRIC GENERATOR

6 - That the time of occurrence of successive series All Constants Be also constant T = Constant -And they are a practical means of applying and also very useful for all, energetically speaking also, because of its better v much lower cost. v the production of electric power generation, with respect to other existing systems, power generation, both fuels, and non-fossil. And also **characterized** as having less environmental contamination v emissions, than other systems, electric power generation. Always in terrestrial physical parameters of own theory of relativity of Einstein 1 - Time, T $\neq$ T1,T2,T $\neq$ 2 - And the curvature of the mass in space causes gravity, which in land become equivalent, always land on physical parameters, A form with the mass, and volume of water accumulated, especially in large bodies of standing water, and n-1 successive oscillations flat in waves and tides, effect of the Earth's gravity, in relation to gravitational forces in space, lunar and solar mainly. Bend sharply to the mass of water, which as a black hole, always land on parameters, it appears that mass or volume of incoming water, equal in volume or mass of incoming water, wells or Communicating Vessels, output the total volume of water entering and returning, all of its mass or volume of incoming water, to sea, lake or other where appropriate. And lesser height, h-1.

CONTINUOUS POWER GENERATOR

No missing orjust not theoretically evaporating mass or volume of any water in the constant cycle path and out of water MI M $\neq\neq$ $\neq$M2 .... Mn-1. A bank and level height, the total volume of incoming water in the bucket constant electricity generator. - Relative As well, the observer the same physical phenomenon and energetic, if you were in space, or same land, Since observe, earth and space, without any constant. Except for constants, my Cube constant electricity generator described above, in one place, The Planet Earth

And not just in space, as we suggested to all Einstein's theory of relativity la. 2 1 $\neq\neq\neq\neq$ 3 n-1 - Being able to be going by much, a more constant. Potential Energy generated by my Cube constant electricity generator of my invention, the height h total cube, or the sum of its h sections - F = P = constant' * (h = CTEL = Constant = Constant = Constant *

And by extension n-1, both the inlet diameter, as sequence n-1, its longitudinal length and surface of the same cube constant electricity generator of my invention. So that, the total volume of water coming h20, 100 m3 volume of h2o reference, single pipe, reference input in the bucket, continuous electrical generator, electricity, or output h2o, the level of the surface, of vessels or wells or communicating vessels interconnected.

At a height I, 100 m, have reference, the cube, continuous electrical generator of electricity, which falls on a vertical plane by the force of gravity g,

CONTINUOUS POWER GENERATOR

Generates a potential energy P = v x g x h = 100 x 9.8 x 100 = 98000 w = 98 kW.

What is the ratio to multiply 100 m3 per unit volume of water intake reference h20. Generated in the fall (3) (4) (18) (1) (5). And also in its ascent (6), continuous, constant motion of the blades (8), the rotors of the generators (9). At the surface of vessels or wells or communicating vessels (10), in a reference ratio of 1/10, with respect to the total volume of water h2o input, reference, or to empty out the source of origin of water that feeds the electricity generation system through pipes. This is 100m3 / 10 = 10 m3 water volume reference rate or volume, of communicating vessels (10), reference to volume of water h2o, input 100 m3, and I've taken, as a reference as well.

Then there would be 10 communicating vessels in the form of v from the end, the bottom of the bucket (1) (2) (19), continuous electrical generator of electricity, with a volume 10 times smaller, interconnected, and with less pressure proportionally too, that the pipe input volume of water h2o, reference 100 m3. Furthermore, with a degree of inclination of said U v of, the hub system, continuous electrical generator (1), electricity, which artificially reproduce the different heights of both inlet and outlet water h20 (3) (4) (18), as the natural water waterfalls,

And after the end of the bottom of the bucket (1) (3) continuous electrical generator, electricity, approximately, of 452 tilt.

CONTINUOUS POWER GENERATOR

Until arriving at the surface of the outlet pipes (6) (10) of the total volume of water h2o incoming vessels or wells or communicating vessels, located at a height h is h20, where h is h2o = h h2o next> next h20 vol I (3) (4) (18) is greater than or greater than the height of entry, the total volume of water in the bucket next h20, continuous electrical generator (1), electricity I volume incoming h20 E equal to the height h = h2o coming, from where the inlet of the incoming h2o. (5) (6) so that the level of the surface of water, of communicating vessels (10) between them, (4) (18) is equal to the level of the incoming water through piping, in a always previously depressed area in a completely artificial (3), height, h-1 = I <h = h h2o see incoming inland which in turn, are further inland yet, the cube, continuous electrical generator (1) of electricity, of my invention, or even greater distance than this, with respect to the shore, the sea, lake, pond, river or river, or any other water accumulation, that is supplied generating system cube (18) Pouring water volume reference input of 100 m3 by pipeline directly (5) (6) (10), or a warehouse in parallel connected by pipes, the greater the height h is h20, h is h,20 > I h20 ent therefore that hc, (3) (4) (18) which hypothetically or theoretically contain the total volume of incoming h2o water, located in the circular rings of the surface of the communicating vessels (10) (6), with a height difference between the continuous circular rings of communicating vessels (10) (20), fall in height h is (4), more distant from the center of the circular system

CONTINUOUS POWER GENERATOR

more central ring of communicating vessels (10) drain the total water volume of the incoming h2o out of communicating vessels (10) to the surface level of the incoming water h2o, (18) (3) becomes the total volume of water h2o outgoing higher up than this, (4) ring vcl h> h ring is 2> h ring is 3> h ring is n-1 (10) (20) always helped by an external energy source (11) (16) (4) (18), or sea, lake, pond, river or estuary, or any accumulation of water h2o, which takes water h20, the hub system, continuous electrical generator (1), electricity, which artificially reproduce both the different heights of the system; I <h see h2o incoming outgoing = H, U-shaped. (3) (4) (18)

Provided by pipe (5) (6), which is the same height level of the surface, h2O is vol, h2O out going, h20 = h input. (4) (18). Or lower the height h-1 = hc (3), the level of the surface of the cube, continuous electrical generator (1), electricity, where the entrance is actually produced in the volume of water h20 reference input of 100 m3 through pipelines (5) (6). Provided also helped in its pumping bilge pumps (16) (10) (11), of the total volume of incoming water, which must always be equal to the volume of outgoing water, to flow continuously. γ is a constant = constant

While being at a height h above a reference meter as measured at or about hl = h20 recess (18) (3) h20 water inlet (18), a hub (3), continuous electrical generator (1). That is totally depressed about my invention and is artificially high, h-1 = h h20 incoming (3), with respect to it, and

CONTINUOUS ELECTRIC GENERATOR

with respect to the level of the water surface H2O (18), where also take through pipe (5), the volume of water input h20. U-shaped (1)

Since in fact moved h20 water volume of 100 m3 reference. From a Vertical Plane (2 H 5). To a horizontal plane (10 H 6)

(4), with theoretical deposit of the total volume of incoming water h2o = the volume of water h2o outgoing and Parallel to Communicating Vessels connected together by pipes (6), of the sum of the total volume of water outgoing h20 = the total volume of incoming h2o water, one meter reference height h above the height h-1 of The surface of the cube, continuous electrical generator, I (3) (4) (18) h = h h20> i = h-1 With a result that energy is the gain over 99% or even 100%, as I explain below, by the difference of height h vc, hc, and h h20 (h vc> = h h20)> (hc = hl), (3) (4) (18)

And at much lower cost of production of electrical energy that the rest of la generating electrical energy from other conventional energy sources from fossil fuels

And also those from non-fossil energy sources or renewable. Including hydroelectric - As my invention of the electric generator hub, continuous electrical generator, costs that are diluted over time as well, much lower than the rest

CONTINUOUS POWER GENERATOR

As a direct result of being continuous constant v the generation electric power generator of my invention, artificially reproducing the different heights v natural hydraulic jumps h2 water. And to work steadily continues its own mechanism v that of its operation. HLI The Hours of the Year 8760 iil. The cube, continuous generator, electricity i 1). And direct consequence of the fluid v consistent performance by all its elements v components: f I) (2) (3) f 4 H 18) (5) t 6) (7) I 8 H 9) (10 H 11) t 12) f 13) 114) (15) (16) (17) (19) (20).

And the continuous turning and flowing steadily incoming h2o water bay outside the system (1), and without relying on rain water of the other hydro generators, but an accumulation of water h2o (12), incoming My system generator (1) (2) (3) (4), (18), of the total costs of construction and materials fields, pipes (5) (6), blades (8), generators (9), communicating vessels (10) pumps, pumping (16) and extraction Always aided by an external source of energy to the system (11) and bilge water incoming h2o. And of the vertical and horizontal planes and in the General Plan of the system U-shape, (1), (18) (3) (4), and we canalize in the place

CONTINUOUS POWER GENERATOR

The reference volume of water h2o, 100 m3 of reference (12), which I mentioned.

And the volume of water h2o = Water Volume Inbound Outbound h2o Are such that a constant As = A = constant. Also fall, however, for only the difference in height between two levels (4) (3), but theoretically, except incase of collapsing the same system of natural or accidental, to draw on such no external source of electricity (10) (11) (16) (18), already existing outside the cube generation system. Generating an energy gain of over 99% Being reference to one meter, higher than the hub h is> hc, have continuous electric generator, and that the level of the surface of the water intake h20, which is poured sea, lake, pond, river or estuary, or any accumulation of water h20, which provides a greater height h h20 starter, with respect to the height level of the surface of the bucket system I have.

And unless failure or collapse of the electricity generator hub.

Of even a 100% profit without relying if you do not always required of External Power Supply. When, in fact, be a difference of heights between the three levels of the system. VC H2O H = h> h h C, forming a U. (1)

To be larger or smaller depending on the sum n-1, each of the elements and features that comprise my invention, continuous electrical generator hub (1) (2) {3) (4) (18) (5) (6) (7) (8) (9) (10) (11) (16) CONTINUOUS POWER GENERATOR

From the higher r 2 it, possible, or resulting number diameter of each of the n-1 possible pipes (5) (6) that compose added and lo, inlet and outlet water volume H2O - Up to the sum of the n-1, electricity generators themselves (8) (9). - Y of the n-1 multipliers, it has within each of the pipes, the cube continuous electrical power generator. - In addition to the efficacy of the Cube continuous electrical generator of electricity, dependent lo described above, Y that is regulated by computer always (17), total water volume projection, the total volume of incoming water, wells or communicating vessels (10) (11) (16), with corresponding pumps bilge pumping the same volume of water entering the bucket continuous electrical generator. - That has to be, = Equal. Total volumes in both Input Output v v. - Total water V out = V 1 + V communicating vessel communicating vessel 2 + V 3 + V communicating vessel communicating vessel 4 + V 5 + V communicating vessel communicating vessel n-1 (10 H 6). Total water V out = V total incoming water. Repeat and summarize, again too. So that the volume of water flow and to flow out and turn and continuously, and is a constant; The total volume of incoming water, they do not sink to the hub or main vessel (I) (2)

CONTINUOUS POWER GENERATOR

with respect to the succession, the necessary wells or communicating vessels (10) (6) connected to each other and with different heights from higher to lower and lower or higher than the bottom of the bucket constant electricity generator (3) (4) (18) - They're also farther inland, or with respect to, the cube constant electricity generator of my invention. And also, regarding the level of the surface of the sea, or the accumulation of water from which is (12), the total volume of incoming water, the Cube constant electricity generator (1).

- And always necessary External Power Source (11) is existent, and either wind or sea or photovoltaic etc .... etc.... To draw water from wells or ships or vessels Communicating f 16) f 10). Pe lower section or volume of each of them (21) (6). That the sum of the total, each of them. That the Continuous Electrical I Generator Cube (1)

$$Vc\ V <V\ c,\ v\ V\ vcl + V + V\ vc3\ vc2\ ....\ Vcn\text{-}l\ V> V\ c$$

- And keeping the highest proportion of Possible v Required Volume of Air. V For optimal handling better, v v repair maintenance conservation. (22)
- With pumps pumping (16) for the drainage of the total volume of incoming water.

As there must always lo in the Cube also constant electricity generator (1), which are also communicated through more or also a greater number of pipes (6). - And at higher altitudes lower end, hf vc> hfc, (23) (24) Cube constant electricity generator. And channeled through CONTINUOUS POWER GENERATOR pipes also abroad (5) (6) (25), from more inland, farther away from this, that la Cube constant electricity generator.

- To do: That completes a cycle of input, output v of water, without evaporation,
- It is produced artificially and through pipes (5) (6), as occurs naturally in our very nature, Earth Planet.
- Always with the aid. (10) (11) (16) of an External Power Supply. Cubed Continuous Power Electric Generator. Existing, will either wind, marina, or photovoltaic, or the like.
- For extraction, with pumps pumping to the surface of the pipes return lines (24), salt h2o hv> hv h20 incoming (4) (18) (12), the level of the surface and edge from which the total volume of the Great Mass of Feed Water Cube electric generator to power at a lower level of where it takes the level of the surface of the sea or lake pond, river, estuary, or accumulation of water system is installed.

Despite being at higher altitude is h salt h2o, (4) (3) h is salt h2o> hc h2o ent, the level of the surface of all water wells or ships or communicating vessels bilge requirements (10) (4) - The level of the height hc in coming, or in to H2O (3), of the surface of the water inlet or hub beginning electric power generator (18) (4) (12). Also, although the level of the height of the water surface or close valves around their successive and consecutive high water table level hv h2o (4), groundwater level hv = h h20 h20 incoming level, (4) (18) CONTINUOUS POWER GENERATOR
(12) of these same wells or ships or communicating vessels (10) bilge (16) served by pipes to each other (6), the cube constant electricity generator (1). That is the same as Level Water Table of the surface water of the total input to Cube Continuous Electrical Generator Electricity h20 h incoming level. (4) (18) (12). With respect to the surface of where the set of pipes, water channeling outgoing and incoming continuous hub electric power generator of my invention (24) (5) (6) (1). - What is more, at a lower height, edge or less similar to the height level of the surface at a lower height (25) (3) (4) (18) (12) (1) is h2o salt h> h incoming h2o> h h20 c
It is this small difference between the two heights of hv, h is h2o, and h is h20 salt, lo is sufficiently small, so that an auxiliary, and in his absence, always necessary, (11) (10) External Power Source, such as the one existing wind or others; of pumping or extraction (16) of the total volume of outgoing water equal to the volume of incoming water in the bucket constant electricity generator (1). Also can be made
With pressure pumps (26), as used in all buildings of a city or town, which would be used only in the absence of external energy sources these (11), or for which they are properly used, substitution to the tasks of the fault, and maintenance of external energy sources, the Cube n-1, Continuous Electrical Generator Electric (1).
CONTINUOUS ELECTRIC GNERADOR

- 9 - You can record as well. And in addition v additional or auxiliary, or attached to same cube, continuous electrical generator, electricity.

Of a water treatment plant to optimize the H2O water for both human consumption or crops, See Drawings 1, 2, 3, 4 and onwards for traditional methods of reverse osmosis Or, by artificial propagation of the methods themselves on the nature of freezing H2O, and the corresponding water desalination same Freeze H2O For sea water, which makes the salt, to be decanted to the bottom of H2O, not frozen, frozen Lagging, suitable for consumption, both human and animal or crop. Where scarce.
Thanks to the large amount of electrical energy generated by the cube, continuous electrical generator, electricity, my invention.
(2) Claim number (2) of the cube, continuous electrical generator (1), which is added and complete claim number (1) of the cube, generator mode: To reproduce artificially, inside pipe (5) (6), different natural hydraulic waterfalls (3) (4) (18), without any need to depend on the water of the rain, or varying river flows. But existing accumulations of water, whether from the sea (12), lakes, existing ponds and at the same time, v estuaries of rivers. Placing the bucket, continuous electrical generator (1), the Drawing 1, 6, 9 et seq, in the interior of an existing water accumulation (12), as well as sea, lake, river or river. Anchored or attached to the bottom of this (26), such that;
CONTINUOUS POWER GENERATOR
1-the inlet of water to the water channeling pipes are on the surface of the inlet of the total volume of water being equal heights h loved, hc = h incoming H2O. a) to be anchored, b) or floating in the water level of the accumulation h20 h2o water using the cube, continuous electrical generator (1) (3) (18) (12)

2 - And the water level of the surface of the pipe of the different vessels or wells or communicating vessels (6) (4) (10), for pumping (16) by an external electrical energy source (11) to source to power the hub system, continuous electrical generator (1), for returning to this (12), Outside the Cube system, continuous electrical generator

It must always be, (4) (10) (12) (18) a) at a height h above is, a-1) inland, a-2) or output higher than the hub system, continuous electrical generator in the same medium from which the h2o incoming water (3) (12).

To of the above cube heights I and incoming water level in the bucket H is h2o outgoing> i = h incoming h2o. For return of the volume of incoming water to the accumulation of water through its origin (12), I either sea, lake, pond, river or estuary, or other accumulation of h2o water that feeds the system cube, continuous electrical generator (1).

b) or to a lower final height h is (4), to of the above cube heights hc (2) (3), and especially at a height below the level of the surface of the water accumulation August 12) the volume of h2o water inlet (18) of origin of the bucket system, continuous electrical generator (1), of electricity, which really makes the volume flow of water entry and exit of the bucket system, continuous electrical generator (17), CONTINUOUS POWER GENERATOR h2o is outgoing h <he = h incoming h2o. (3) (4) (18)

3 - reduce water pumping by the pump (16) (10) pumping water to shrink by always required external power source (11), has to be, maintain and regulate the total water volume of incoming h20 so that is constant, a constant total water volume outgoing = total volume of incoming water (17).

For water h2o flow, and does not collapse the bucket system, continuous electrical power generator.

(3) Claim number (3) of the cube, continuous electrical generator, v is added to claim complete t 1) v (2) of the cube, continuous electrical generator (1): That artificially reproduced within pipes (5) (6), different natural hydraulic waterfalls (2) (3 H 4 H 18), without any need to depend on the water of the rain, or varying river flows. But existing accumulations of water, whether from the sea (12), lakes, ponds and existing at that moment: the rivers and estuaries. Drawings 1. 3. 5 and 6 below. But not built in a flat or lower height h, (1) (3) With respect to the level of the input surface of H2O, (12) (18) But take advantage of several successive constructions of buildings already constructed or under construction on the surface of the earth. (13) They are at different heights or different h hl.... hn-1 (27) mode or as different water hydraulic jumps H 20 existing naturally in nature.

But filling the bucket or fencing or building existing or under construction, with a space with two circles with closed circular surfaces (14), with a distance apart, for example five or so meters, enough to hold inside, CONTINUOUS POWER GENERATOR

sufficient volume of water (12), from the sea, lake, pond, river, estuary or any water accumulation which takes the system. For ascent filled with water to the surface around the internal volume of the two circles ring (3) (18) (14), the 1st sufficiently close to each other and also sealed to prevent leakage of water. Above that height h, the continuous electrical generator hub makes it decant the water found in it, height differences, the well or pond top of the building, at a lower height h-1, which provides water well, to the elements and components, pipes (5) (6), Mills (7), spades (8), generators (9) external power source (11), bilge pumps (16), continuous electrical generator hub (1 ), which is the same as in claim number one. And that the water outlet pipe (6) in the bottom of the bucket continuous electrical power generator at a height h (29), provide water to other hub continuous electrical generator 3 at a height situated lower than the initial (30), driven and taken, by means of gravity g = 9.8 m/s2, and the height difference between them, thus repeating the mechanism, many times as there are buckets or buildings continuous electrical power generators. The lower height than the first, h-1. (3) (4) (18)

(4) Claim number (4) of the cube, continuous electrical generator, is added and completely to claim (1 H 2) v (3) of the cube, continuous electrical generator (1): To reproduce artificially (1) (2) (12), inside pipe (5) (6), different natural water waterfalls f 3) (4 H 18), without any need to depend on the water of the rain. Mayor or varying river flow, But will existing accumulations of water, whether sea, lakes, v of the existing ponds at the same time: the rivers and estuaries. Drawings 1.10. v following - CONTINUOUS POWER GENERATOR

But with the exception that the outlet pipes (6) the volume of incoming water, leaving a lower height than the base of the circular ring surrounding the hub generator h is continuous salt h20 <h20 h rings (4) ( 4') that goes to an external water tank (10), and greater distance from the building, and the circular rings surrounding the hub (12) (13) (14). Parallel forming a third ring (14') input water volume projection. Forming another communicating vessel (10) with previous and higher, than that formed by the previous, volume h20 h a3> h vol h2o al-a2. (3) (4) (18) To proceed with the fall by decantation by gravity and the height difference of the volume of circular rings h20 masters (3) (4) (18) (14') feed through pipelines (5) (6) of water continuously to the volume of previous ring, water inlet (14') (24). That the same principles of claims (1) and (2), to maintain constant and equal; The total volume of water exiting =AI total volume of water input (17).

And through its computer control provided continuous electrical generator hub power of this basic and fundamental principle of my cube, continuous electrical generator (1), which artificially reproduces both different heights (3) (4) (18), which in this again claim unchanged compared to the previous claims 1, 2 and especially in Claim 3, with respect to the previous claims 1 and 2.

And always helped the pumps (10) (16), by External Energy Source (11) Cubed Continuous Power Electric Generator (1).

Reversing a greater height than the inlet, the surface of the existing volume, between said circles, which is filled with water until the top, a larger height h +1, h the building. (14) (14') (3) (4) (18).

That the height difference h +1> h, poured said water channeling also, through pipes, the volume of incoming water in the bucket continuous electrical power generator.

CONTINUOUS ELECTRIC GENERATOR

With the associated pipes dewatering aids (6), and emergency, in case of failure or maintenance or excess volume of water with respect to the total volume of incoming water, in claim number (3) of cube constant electricity generator.

**Statement under Art. 19.1 PCT**

The mechanism and operation of the Continuous Electrical Generator pct 2010/153 If artificially reproduced; The natural water waterfalls A different heights h The initial water level input H2O At the final level of output or return of its various Communicating Vessels At the level of the medium from water, sea, lake Aided by regulating and always by an external source of energy; Wind.,

The volume of released water is equal to or greater volume of incoming water Nor are gravity and pressure differences at different heights,

perpetual motion.

EP 2 463 509 A1

21

EP 2 463 509 A1

23

# INTERNATIONAL SEARCH REPORT

| International application No. |
| --- |
| PCT/ ES 2010/000153 |

**A. CLASSIFICATION OF SUBJECT MATTER**

***F03B 17/06*** (2006.01)

According to International Patent Classification (IPC) or to both national classification and IPC

**B. FIELDS SEARCHED**

Minimum documentation searched (classification system followed by classification symbols)

F03B+

Documentation searched other than minimum documentation to the extent that such documents are included in the fields searched

Electronic data base consulted during the international search (name of data base and, where practicable, search terms used)

INVENES,EPODOC

**C. DOCUMENTS CONSIDERED TO BE RELEVANT**

| Category* | Citation of document, with indication, where appropriate, of the relevant passages | Relevant to claim No. |
| --- | --- | --- |
| X | MATAIX, C. Mecánica de fluidos y máquinas hidráulicas. Ediciones del Castillo, S.A. Madrid. 1986, pages 440 a 459. | 1-21 |
| X | GB 2460081 A (KELLETT IAN) 18.11.2009, the whole document. | 1-21 |
| X | WO 2008134868 A1 (SHERRER GORDON DAVID) 13.11.2008, the whole document. | 1-21 |
| X | GB 2451632 A (VIPOND JOHN) 11.02.2009, the whole document. | 1-21 |
| X | ES 2278543 A1 (RAMIREZ SILVA MARCELINO E) 01.08.2007, the whole document. | 1-21 |
| X | JP 2007205217 A (SHODEN CORP) 16.08.2007, the whole document. | 1-21 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
| --- | --- |
| 28.July.2010          (28.07.2010) | **(02/08/2010)** |
| Name and mailing address of the ISA/ O.E.P.M. Paseo de la Castellana, 75 28071 Madrid, España. Facsimile No.   34 91 3495304 | Authorized officer P. Valbuena Vázquez Telephone No. +34 91 349 85 62 |

Form PCT/ISA/210 (second sheet) (July 2009)

**EP 2 463 509 A1**

## INTERNATIONAL SEARCH REPORT

| | International application No. |
|---|---|
| | PCT/ES 2010/000153 |

| C (continuation). | DOCUMENTS CONSIDERED TO BE   RELEVANT | |
|---|---|---|
| Category* | Citation of documents, with indication, where appropriate, of the relevant passages | Relevant to claim No. |
| X | JP 2006307821 A (FUJII HIROAKI) 09.11.2006, the whole document. | 1-21 |
| X | WO 2004033898 A1 (ACCESS BUSINESS GROUP INT LLC et al.) 22.04.2004, the whole document. | 1-21 |
| X | ES 2249091 A1 (NUEVAS TECNOLOGIAS ENERGETICAS) 16.03.2006, the whole document. | 1-21 |
| X | WO 9314314 A1 (SNELL HYDRO DESIGN CONSULTANCY) 22.07.1993, the whole document. | 1-21 |

Form PCT/ISA/210 (continuation of second sheet) (July 2009)

## INTERNATIONAL SEARCH REPORT

Information on patent family members

| International application No. |
| --- |
| PCT/ ES 2010/000153 |

| Patent document cited in the search report | Publication date | Patent family member(s) | Publication date |
| --- | --- | --- | --- |
| GB 2460081 A | 18.11.2009 | NONE | ------------ |
| WO 2008134868 A | 13.11.2008 | GB 2463176 A<br>US 2010129193 A | 10.03.2010<br>27.05.2010 |
| GB 2451632 A | 11.02.2009 | NONE | ------------ |
| ES 2278543 A B | 01.08.2007 | NONE | ------------ |
| JP 2007205217 A | 16.08.2007 | NONE | ------------ |
| JP 2006307821 A | 09.11.2006 | NONE | ------------ |
| WO 2004033898 A | 22.04.2004 | AU 2003277368 A<br>US 2004195840 A<br>US 6885114 B<br>KR 20050062610 A<br>KR 100699115 B<br>EP 1549848 AB<br>EP 20030808226<br>US 2005161949 A<br>US 7233078 B<br>CN 1723346 A<br>CN 100416091 C<br>JP 2006502344 T<br>JP 4426453 B<br>EP 1795746 A<br>EP 20070005883<br>AT 369491 T<br>CN 101037984 A<br>CN 100543295 C<br>CN 101037985 A<br>CN 100543296 C<br>DE 60315486 T<br>HK 1087752 A<br>JP 2009168033 A<br>HK 1111752 A<br>HK 1108726 A | 04.05.2004<br>07.10.2004<br>26.04.2005<br>23.06.2005<br>21.03.2007<br>06.07.2005<br>09.10.2003<br>28.07.2005<br>19.06.2007<br>18.01.2006<br>03.09.2008<br>19.01.2006<br>03.03.2010<br>13.06.2007<br>09.10.2003<br>15.08.2007<br>19.09.2007<br>23.09.2009<br>19.09.2007<br>23.09.2009<br>24.04.2008<br>05.06.2009<br>30.07.2009<br>04.06.2010<br>09.07.2010 |
| ES 2249091 A B | 16.03.2006 | NONE | ------------ |
| WO 9314314 A | 22.07.1993 | CA 2126971 A<br>AU 2884292 A<br>AU 662767 B<br>EP 0620896 AB<br>EP 19920922267<br>US 5468132 A<br>AT 153105 T<br>DE 69219788 T | 22.07.1993<br>03.08.1993<br>14.09.1995<br>26.10.1994<br>02.11.1992<br>21.11.1995<br>15.05.1997<br>02.01.1998 |

Form PCT/ISA/210 (patent family annex) (July 2009)